# EUROPEAN PATENT SPECIFICATION

(11) **EP 2 307 464 B1**
(45) Date of publication and mention of the grant of the patent: **11.12.2013**
(21) Application number: 09797426.5
(22) Date of filing: 10.07.2009
(51) Int. Cl.: C08F 10/02, C08F 4/654

(54) **PROCESS FOR THE PRODUCTION OF POLYETHYLENE**
VERFAHREN ZUR HERSTELLUNG VON POLYETHYLEN
PROCÉDÉ POUR LA FABRICATION DE POLYÉTHYLÈNE

(30) Priority: 18.07.2008 EP 08012990
(43) Date of publication of application: 13.04.2011
(73) Proprietor: Saudi Basic Industries Corporation, 11422 Riyadh (SA)
(72) Inventor: FRIEDERICHS, Nicolaas, Hendrika, NL-6160 GA Geleen (NL)
(74) Representative: Zuideveld, Mihaela
(86) International application number: PCT/EP2009/005102
(87) International publication number: WO 2010/006756

(56) References cited:
- EP-A- 0 317 200
- EP-A- 0 398 167
- EP-A- 0 574 153
- EP-A- 1 661 917
- WO-A-01/00692
- US-A- 6 114 271

## Description

The present invention relates to a method for preparing a catalyst and to a process for the production of polyethylene in the presence of this catalyst system.

The production of polyethylene in the presence of a catalyst system is very well known. Dall'Occo et al. disclose in "Transition Metals and Organometallics as Catalysts for Olefin Polymerisation" (Kaminsky, W.; Sinn, H., Eds.) Springer, 1988, page 209 that the main requirements of industrial catalysts for the polymerisation of ethylene are high productivity, proper kinetic, no reactor fouling, control of morphology , average particle size and bulk density of the polymer particles.

The bulk density of the polyethylene powder refers to the mass of the powder per unit of volume. This is an important parameter because the obtained powder has to be stored and to be transported. A higher bulk density may decrease clogging at its transportation and it is possible to increase the storable amount per unit volume. By increasing the bulk density, the weight of the polyethylene per unit volume present in a polymerisation vessel will be increased and the concentration of the polyethylene powder in the polymerisation vessel can be enhanced.

The bulk density can be highly affected by the shape of the polymer particles. It is also well known that the shape of the polymer powder particles is translated from the shape of the catalyst particles, also known as the replica phenomenon. In general, when this replication takes place, the average particle size of the polymer is proportional to the cube root of the catalyst yield, i.e. the grams of polymer produced per gram of catalyst. See for example Dall'Occo et al, in "Transition Metals and Organometallics as Catalysts for Olefin Polymerization" (Kaminsky, W.; Sinn, H., Eds.) Springer, 1988, page 209-222. In order to have control over the bulk density of the polymer powder it is important to have control over the shape of the catalyst particles.

It is the object of the present invention to provide a method for preparing a catalyst which results in polyethylene displaying a high powder bulk density and a high catalyst activity.

The method according to the invention comprises a solid reaction product by reacting
(a) a liquid hydrocarbon solution comprising
   (1) an organic oxygen containing magnesium compound and
   (2) an organic oxygen containing titanium compound and
(b) a compound comprising a transition metal from Group IV or V of Mendeleev's Periodic System of Chemical Elements and containing at least two halogen atoms.

According to a preferred embodiment of the invention the solid reaction product from (a) and (b) is treated with (c) an aluminium compound having the formula AlRₙX₃₋ₙ wherein X is an halogenide and R is a hydrocarbon radical containing 1 - 10 carbon atoms and 0 < n ≤ 3.

Preferably the aluminium compound has the formula AlRnCl3₋ₙ wherein R is a hydrocarbon radical containing 1 - 10 carbon atoms and 0 < n ≤ 3.

The catalyst prepared according to the method of the present invention is the solid reaction product obtained from the reaction of two liquid compounds. In order to have control over the shape of the catalyst particles, it is essential that the hydrocarbon solution comprising
(1) an organic oxygen containing magnesium compound and
(2) an organic oxygen containing titanium compound
is a liquid because the presence of any solid particles in the starting compounds might undesirably influence the size and shape of the subsequent catalyst particles

Suitable organic oxygen containing magnesium compounds include for example magnesium alkoxides such as magnesium methylate, magnesium ethylate and magnesium isopropylate and magnesium alkylalkoxides such as magnesium ethylethylate.

According to a preferred embodiment of the invention the organic oxygen containing magnesium compound is a magnesium alkoxide.

Preferably, the magnesium alkoxide is a magnesium (C₁-C₃) alkoxide.

More preferably the magnesium alkoxide is magnesium ethoxide Mg(OC₂H₅)₂

According to a preferred embodiment of the invention, the organic oxygen containing titanium compound may be represented by the general formula [TiOₓ(OR)₄₋₂ₓ]_{.n} in which R represents an organic radical, x ranges between 0 and 1 and n ranges between 1 and 6.

Suitable examples of organic oxygen containing titanium compounds include alkoxides, phenoxides, oxyalkoxides, condensed alkoxides, carboxylates and enolates.

According to a preferred embodiment of the invention the organic oxygen containing titanium compound is a titanium alkoxide.

Suitable titanium alkoxides include for example Ti(OC₂H₅)₄, Ti(OC₃H₇)₄, Ti(OC₄H₉)₄ and Ti(OC₈H₁₇)_{4.}

According to a preferred embodiment of the invention the titanium alkoxide is Ti(OC₄H₉)₄.

Preferred compounds comprising a transition metal from Group IV or V of Mendeleev's Periodic System of Chemical Elements and containing at least two halogen atoms are Ti (IV) halogenide, V (III) halogenide, V (IV) halogenide and V (V) oxyhalogenide.

Preferably Ti (IV) halogenide is TiCl₄.

Preferably V (III) halogenide is VCl₃.

Preferably V (V)oxyhalogenide is VOCl₃.

The most preferred transition metal compound is TiCl₄,

Suitable examples of the aluminium compound having the formula AlRₙCl₃₋ₙ include ethyl aluminium dichloride, propyl aluminium dichloride, n- butyl aluminium dichloride, iso butyl aluminium dichloride, diethyl aluminium chloride and diisobutyl aluminium chloride, triethyl aluminium, triisobutyl aluminium and trihexyl aluminium.

According to a preferred embodiment of the invention the organo aluminium compound is ethyl aluminium dichloride.

The hydrocarbon solution comprising an organic oxygen containing magnesium compound and an organic oxygen containing titanium compound can be prepared according to procedures as disclosed for example in US 4178300 and EP 876318. The solutions are in general clear liquids. In case there are any solid particles, for example due to unreacted starting materials, these can be removed via fittration prior to the use of the solution in the catalyst synthesis.

The molar ratio the organic oxygen containing magnesium compound from (a) (1) to the organic oxygen containing titanium compound from (a) (2) may range between 0.1:1 and 3:1.

Preferably this ratio is between 0.5:1 and 3:1.

More preferably this ratio is between 1.5:1 and 2.5:1.

The molar ratio of the halogen from (b) to magnesium from (a) (1) is at least 0.25:1.

More preferably this ratio is at least 0.5:1.

Preferably the halogen is chlorine.

The molar ratio of the aluminium compound from (c): the transition metal compounds from (a) (2) and (b) ranges between 0.1: 1 and 20:1.

More preferable this ratio ranges between 0.3:1 and 10:1.

The catalyst may be obtained for example by a first reaction between a magnesium alkoxide and a titanium alkoxide, followed by dilution with a hydrocarbon solvent such as for example pentane, hexane or heptane, resulting in a soluble complex consisting of a magnesium alkoxide and a titanium alkoxide and thereafter a reaction between a hydrocarbon solution of said complex and the transition metal compound.

The transition metal compound, for example TiCl₄, is preferably used as a solution in a hydrocarbon such as for example pentane, hexane or heptane.

The temperature for the reaction between (a) and (b) may be any temperature below the boiling point of the applied hydrocarbon. Preferably the temperature is below 60°C and more preferably below 50°C. Generally the addition takes place during more than 10 minutes.

During the reaction of the hydrocarbon solution comprising the organic oxygen containing magnesium compound and the organic oxygen containing titanium compound with the transition metal compound a solid precipitates and after the precipitation reaction the resulting mixture is heated and refluxed to finish the reaction. After the reaction the precipitate is filtered and washed with a hydrocarbon. Other means of separation of the solids from the diluent and subsequent washings can also be applied, like for example multiple decantation steps. All steps should be performed in an inert atmosphere of nitrogen or another suitable inert gas. The post treatment step with the aluminium compound may be performed either before the filtration and washing steps or after this procedure.

Generally the average particle size of the catalyst ranges between 3 µm and 30 µm.

Preferably the average particle size of the catalyst ranges between 3 µm and 10 µm.

Generally the span of the particle size distribution is lower than 3.

The catalyst system according to the invention results in polyethylene having the desired values for powder bulk density, span and an average particle size below for example 400 µm.

The catalyst shows high catalyst activity and productivity and the catalyst residues in the polymer are very low.

An additional advantage is the relatively simple and cheap synthesis to produce the catalyst because the synthesis is based on compounds which are readily available and relatively easy to handle.

The process to obtain the polyethylene takes place in the presence of a catalyst and a co catalyst wherein the catalyst comprises the solid reaction product obtained by reaction of:
(a) a hydrocarbon solution comprising
   (1) an organic oxygen containing magnesium compound
   (2) an organic oxygen containing titanium compound and
(b) a compound comprising a transition metal from Group IV or V of Mendeleev's Periodic System of Chemical Elements and containing at least two halogen atoms and wherein
the co catalyst is an organo aluminium compound having the formula AlR₃ in which R is a hydrocarbon radical containing 1 - 10 carbon atoms.

Suitable examples of the organo aluminum compound of the formula AlR₃ include for example triethylaluminium, triisobutyl aluminium tri-n-hexyl aluminium and tri octyl aluminium.

According to a preferred embodiment of the invention the solid reaction product from (a) and (b) is post treated with (c) an aluminium compound having the formula AlRₙX₃₋ₙ wherein R is a hydrocarbon radical containing 1 -10 carbon atoms , X is a halogenide and 0 < n ≤ 3.

Preferably the halogenide is a chloride.

The obtained particle morphology of the catalyst is excellent, which is beneficial to all particle forming polymerisation processes.

Generally the bulk density of the polyethylene powder of the invention ranges between 200 kg/m³ and 500 kg/m³ and preferably this bulk density ranges between 250 kg/m³ and 400 kg/m³ .

The ethylene homo polymer and/or co polymer obtained with the process according to the invention is a powder having the following characteristics:
- an average molecular weight higher than 10,000 g/mol and lower than 10,000,000 g/mol
- an average particle size (d₅₀) between 50 and 400 µm and
- a bulk density in a range between 200 and 500 kg/m³

The polymerisation reaction of ethylene may be performed in the gas phase or in bulk in the absence of an organic solvent or carried out in liquid slurry in the presence of an organic diluent. The polymerisation can be carried out batchwise or in a continuous mode. The polymerisation can also be carried out in multiple interconnected reactors, for example in 2 reactors in series using different conditions in each reactor in order to broaden the molecular weight and compositional distribution of the polyethylene and to obtain bimodal polyethylene.These reactions are performed in the absence of oxygen, water, or any other compounds that may act as a catalyst poison. Suitable solvents include for example alkanes and cycloalkanes such as pentane, hexane, heptane, n-octane, iso-octane, cyclohexane, and methylcyclohexane; alkylaromatics such as toluene, xylene, ethylbenzene, isopropylbenzene, ethyltoluene, n-propylbenzene and diethylbenzene. The polymerisation temperature may range between 20°C and 200°C and preferably ranges between 20°C and 120°C. The partial pressure of a monomer during polymerisation may be the atmospheric pressure and more preferably a partial pressure between 2 and 40 bars.

The polymerisation can be carried out in the presence of a so-called anti-static agent or anti fouling agent, in an amount ranging from 1 to 500 ppm related to the total reactor contents.

Also so-called external donors may be applied during the polymerisation in order to further modify the catalyst performance if this is desired. Suitable external donors are organic compounds containing hetero atoms which have at least one lone pair of electrons available for coordination to the catalyst components or aluminum alkyls. Suitable examples of external donors include alcohols, ethers, esters, silanes and amines.

The catalyst prepared according to the method of the invention may be applied in ethylene polymerisation processes to produce for example high density polyethylene, linear low density polyethylene and ultra high molecular weight polyethylene. Polyethylenes and production processes are disclosed in "Handbook of polyethylene" by Peacock ; pages 1-66 (ISBN 0-8247-9546-6).

According to a preferred embodiment of the invention the catalyst is applied in the production of ultra high molecular weight polyethylene (UHMWPE).

Ultra high molecular weight polyethylene is a special class of polyethylene. A polymer synthesis to obtain UHMWPE is disclosed in Journal of Macromolecular Science Part C Polymer Reviews, Vol. C42, no 3, pp 355-371, 2002. Generally UHMWPE is a linear polyethylene with a very high average molecular weight ranging from about 1,000,000 to well above 6,000,000 grams/mole.

The molecular mass of the polymer can be controlled by any means as known in the art, like for example by adjustment of the polymerisation temperature or by the addition of molecular weight control agents, like hydrogen. In the case of UHMWPE, it is difficult to analyze its molar mass by for instance Gel Permeation Chromatography (GPC) due to the very high molecular weight of UHMWPE. Hence it is common to measure the viscosity of a dilute solution of UHMWPE, for instance in decalin at 135°C. This viscosity can subsequently be translated to the molecular weight.

According to a further preferred embodiment of the invention the catalyst is applied in the production of bimodal polyethylene. The production of polyethylene in a so-called bimodal process and the use of the bimodal products are disclosed at pages 15-20 of "PE 100 pipe systems" (second edition, editor Bromstrup, ISBN 3-8027-2728-2).

WO 01/00692 discloses a method of halogenating a solid precursor to form a solid polymerization procatalyst. A solid magnesium/transition metal-containing alkoxide complex precursor is seperately prepared and subsequently contacted with a halogenating agent selected from alkylaluminum halide, TiX₄, SiX₄, BX₃, and Br₂, where halide and X are each respectively a halogen, and when an alkylaluminum halide, TiX₄, SiX₄, and Br₂ are used as the halogenating agent, they are used together or in combination in a multi-step halogenation. The procatalyst then can be converted to an olefin polymerization catalyst by contacting it with a cocatalyst and optionally a selectivity control agent. In contrast to the present invention the precursor of WO 01/00692 is solid. Therefore, the halogenation step according to WO 01/00692 must be carefully carried out in order to preserve the morphology as dictated by the solid magnesium/transition metal-containing alkoxide complex precursor. WO 01/00692 is not directed to UHMWPE or to bimodal polyethylene.

EP1661917 is directed to a process for the preparation of a catalyst component for the polymerization of an olefin wherein a solid compound with formula Mg(OAlk)ₓCl_{y} is contacted with a titanium tetraalkoxide in the presence of an inert dispersant to give an intermediate reaction product and wherein the intermediate reaction product is contacted with titanium tetrachloride in the presence of an internal electron donor. The catalyst component of the invention is very suitable for the preparation of poly propylene. According to this disclosure, the solid particles are obtained by treating a solution of a magnesium Grignard compound with an alkoxysilane using a mixing device in order to improve the morphology of the catalyst particles. The resulting solid particles are subsequently treated with a titanium tetraalkoxide to obtain a solid intermediate reaction product which than is contacted with titaniumtetrachloride in the presence of an internal electron donor. This product may be applied during the preparation of a polypropylene catalyst. However, the synthesis involves multiple steps and would be too elaborate to result in a cost effective catalyst for polyethylene.

EP 398167 discloses the polymerisation of ethylene using a catalyst which comprises a trialkyl aluminium compound and the entire product from the reaction of a very special magnesium alkoxide compound dissolved in an inert solvent with a tetravalent transition-metal compound and an organoaluminium compound and optionally an electron donor. Contrary to the catalyst according to the present invention, the catalyst according to EP 398167 is prepared via solid particles obtained from the reaction of the special magnesium compound, like for example magnesiumbis(2-methyl-1pentyl-oxide), with a titanium compound and an aluminum compound. According to the present invention relatively cheap magnesium alkoxides like Mg(OC₂H₅) are applied. These alkoxides are excluded in the invention according to EP398167.

US6114271 discloses a process for the preparation of a catalyst component for the polymerization and copolymerization of ethylene to give ultrahigh-molecular-weight ethylene polymers. Reaction of a Grignard compound with a halogenating agent, a titanium compound, a perhalogen compound and an electron-donor compound and subsequent comminution of the resultant solid to a mean particle size of from 0.5 to 5 micrometers gives a catalyst component which, together with an organoaluminum compound, results in ultrahigh-molecular-weight ethylene polymers having a mean particle diameter of from 50 to 200 micrometers and a viscosity index of greater than 2,000 cm³/g. The preparation of the catalyst component consists essentially of (A)reacting a dialkyl magnesium compound with a halogenating agent of the formula R₃Cl to give a solid product and (B) reacting the solid product with a hydrocarbon-soluble titanium compound together with a perhalogen compound. US6114271 does not disclose the use of an organic oxygen containing magnesium compound. Additionally US6114271 teaches the use of toxic compounds like tetrachloromethane or chloroform. These undesired compounds are not required for the preparation of the catalyst according to the present invention.

EP574153 discloses a process for preparing an ultra-high molecular weight polyethylene, using a solid catalyst obtained by contacting a reaction product resulting from the reaction of a magnesium halide and a titanium containing compound and a reaction product resulting from the reaction of an aluminum halide like AlCl₃ and a compound of the formula R²OR³. Essential differences between EP574153 and the present invention are the use of the magnesium halide instead of the organic oxygen containing magnesium compound and the use of AlCl₃ instead of an aluminium compound having the formula AlRₙX₃₋ₙ wherein X is an halogenide and R is a hydrocarbon radical containing 1 - 10 carbon atoms and 0 < n ≤ 3. EP574153 teaches that the use of a halogenated transition metal compound like TiCl₄ leads to relatively low catalyst activities and reduced bulk density.

EP 317200 discloses a process for preparing an ultra-high molecular weight polyethylene by the polymerization of ethylene using a catalyst comprising a solid catalyst component and an organometallic compound wherein the solid catalyst component is a product obtained by contacting the reaction product of a magnesium dihalide and a titanium compound represented by the general formula Ti(OR)₄ and the reaction product of an aluminum trihalide and a silicon compound represented by the general formula Si(OR)₄. Essential differences are the use of the magnesium halide instead of the organic oxygen containing magnesium compound and the use of AlCl₃ instead of an aluminium compound having the formula AIRₙX₃₋ₙ wherein X is an halogenide and R is a hydrocarbon radical containing 1 - 10 carbon atoms and 0 < n ≤ 3.

The invention will be elucidated by means of the following non-restrictive examples.

### Examples

All examples were carried out under a blanket of nitrogen.

The poured bulk density of the polyethylene polymer powder is determined by measuring the bulk density of the polymer powder according to ASTM D1895/A.

The Flow Value is determined according to DIN53493.

The average particle size (D₅₀) of the catalyst was determined by the so called laser light scattering method in hexanes diluent using a Malvern Mastersizer equipment.

The average particle size and particle size distribution ("span") of the polymer powders were determined by sieve analyses according to DIN53477

The solids content in the catalyst suspension was determined in triplo by drying 10 ml of a catalyst suspension under a stream of nitrogen, followed by evacuating for 1 hour and subsequently weighing the obtained amount of dry catalyst.

### Example I

### Preparation of a hydrocarbon solution comprising the organic oxygen containing magnesium compound and the organic oxygen containing titanium compound

100 grams of granular Mg (OC₂H₅)₂ and 150 millilitres of Ti (OC₄H₉)₄ were brought in a 2 Litre round bottomed flask equipped with a reflux condensor and stirrer. While gently stirring, the mixture was heated to 180°C and subsequently stirred for 1, 5 hours. During this, a clear liquid was obtained. The mixture was cooled down to 120°C and subsequently diluted with 1480 ml of hexane. Upon addition of the hexane, the mixture cooled further down to 67°C. The mixture was kept at this temperature for 2 hours and subsequently cooled down to room temperature. The resulting clear solution was stored under nitrogen atmosphere and was used as obtained. Analyses on the solution showed a titanium concentration of 0, 25 mol/l.

### Example II

### Preparation of the catalyst

400 ml hexane was added to a three neck glass vessel, equipped with baffles, a stirrer, a dropping funnel and a condenser. To this, 2 ml (18, 2 mmol) TiCl₄ was added. The stirrer was set at 650 RPM. Via the dropping funnel, 80 ml of the hydrocarbon solution comprising the organic oxygen containing magnesium and titanium compound prepared according to Example I was dosed in 30 minutes time. During this dosing a white precipitate was formed. The mixture was heated to 50°C and stirred at this temperature for 1 hour. Subsequently the mixture was cooled down to ambient temperature. Then 75 ml of a 50wt% solution of ethyl aluminium dichloride was dosed in 20 minutes time, after which the mixture was heated to 70°C and kept at this temperature for 3 hours.
The red-brown suspension was filtered and the solids were washed 3 times with hexanes. The solids were resuspended in hexanes.

### Example III

### Preparation of the catalyst

400 ml hexane was added to a three neck glass vessel, equipped with baffles', a stirrer and a dropping funnel and condenser To this, 4 ml (36,4 mmol) TiCl₄ was added. The stirrer was set at 900 RPM. Via the dropping funnel, 75 ml of the hydrocarbon solution comprising the organic oxygen containing magnesium and titanium compound prepared according to Example I was dosed in 90 minutes time. During this dosing a white precipitate was formed. The mixture was heated to 70°C and stirred at this temperature for 1 hour. Subsequently the mixture was cooled down to ambient temperature. Then 50 ml of a 50wt% solution of ethyl aluminium dichloride was dosed in 60 minutes time, after which the mixture was heated to 70°C and kept at this temperature for 2 hours.
The red-brown suspension was filtered and the solids were washed 3 times with hexanes. The solids were resuspended in hexanes.

### Example IV

### Preparation of the catalyst

400 ml hexane was added to a three neck glass vessel, equipped with baffles, a stirrer and a dropping funnel and condenser. To this, 1 ml (9.1 mmol) TiCl₄ was added. The stirrer was set at 930 RPM. Via the dropping funnel, a mixture of 50 ml hexanes and 75 ml of the hydrocarbon solution comprising the organic oxygen containing magnesium and titanium compound prepared according to Example I was dosed in 20 minutes time. During this dosing a white precipitate was formed. The mixture was heated to 50°C and stirred at this temperature for 1 hour. Subsequently the mixture was cooled down to ambient temperature. Then 50 ml of a 50wt% solution of ethylaluminiumdichloride was dosed in 15 minutes time, after which the mixture was heated to 70°C and kept at this temperature for 2 hours. The red-brown suspension was filtered and the solids were washed 3 times with hexanes. The solids were resuspended in hexanes.

### Example V

### Polymerisation in the presence of the catalyst according to Example II

To a 10L autoclave, containing 5 L purified hexanes as a diluent, 8 mmols of tri-iso butylaluminium were added. The mixture was heated to 75°C and pressurized with 1.5 bars of ethylene. Subsequently a slurry containing 20 milligrams of the catalyst prepared according to Example II was dosed. The temperature was maintained at 75°C and the pressure was kept constant by feeding ethylene. The reaction was stopped when approximately 1000 grams of ethylene had been supplied to the reactor. Stopping was performed by depressurizing and cooling down the reactor. The reactor contents were passed through a filter; the wet polymer powder was collected and subsequently dried.
1083 grams of free flowing polyethylene were produced in 104 minutes. The polymer powder was characterized by
- an average particle size of 136 µm
- a span of 1.0 and
- a bulk density of 340 kg/m³

### Example VI

### Polymerisation in the presence of the catalyst According to Example III

The polymerisation was carried out in a similar manner as described under Example V, using 20 milligrams of catalyst, with the exception that the ethylene pressure was 1 bar and that the reaction was stopped when approximately 1300 grams of ethylene had been dosed to the reactor. 1334 grams of free flowing polyethylene were produced in 102 minutes. The polymer was characterized by
- an average particle size of 194 µm
- a span of 0.95 and
- a bulk density of 295 kg/m³

### Example VII

### Polymerisation in the presence of the catalyst according to Example IV

The polymerisation was carried out in a similar manner as described under Example V, this time using 40 milligrams of catalyst and an ethylene pressure of 1 bar and the reaction was stopped when approximately 1100 grams of ethylene had been supplied to the reactor.
1150 grams of free flowing polyethylene were produced in 120 minutes The polymer was characterized by
- an average particle size of 121 µm
- a span of 0.69 and
- a bulk density of 300 kg/m³

The Examples V-VII demonstrate that the polyethylene obtained with the catalyst obtained according to Examples II - IV have a combination of desired values of activity , particle size , particle size distribution and bulk density. The values for the span indicate the uniform particle size distribution.

### Comparative Example A

Example I was repeated with the exception of the addition of hexane.
The obtained product was a hard solid being unsuitable for further catalyst synthesis.

## Claims

1. A method for preparing a catatyst for the production of polyethylene comprising a solid reaction product by reacting:
(a) a hydrocarbon solution comprising
(1) an organic oxygen containing magnesium compound and
(2) an organic oxygen containing titanium compound and
(b) a compound comprising a transition metal from Group IV or V of Mendeleev's Periodic System of Chemical Elements and containing at least two halogen atoms,
wherein during the reaction of the hydrocarbon solution (a) with the transition metal compound (b) a solid precipitates and wherein after said precipitation reaction the resulting mixture is heated and refluxed to finish the reaction.

2. A method for preparing a catalyst according to Claim 1 **characterized In that** the solid reaction product is treated with an aluminium compound having the formula AlRₙX₃₋ₙ wherein X is a halogenide and R is a hydrocarbon radical containing 1 -10 carbon atoms and 0 < n ≤ 3.

3. A method for preparing a catalyst according to any one of Claims 1-2 **characterized in that** the organic oxygen magnesium compound is a magnesium alkoxide.

4. A method for preparing a catalyst according to Claim 3 **characterized in that** the magnesium alkoxide is magnesium ethoxide.

5. A method for preparing a catalyst according to any one of Claims 1-4 **characterized in that** the organic oxygen containing titanium compound is a titanium alkoxide.

6. A method for preparing a catalyst according to Claim 5 **characterized in that** the titanium alkoxide is Ti(OC₄H₉)₄

7. A method for preparing a catalyst according to any one of Claims 1-6 **characterized in that** compound (b) comprising a transition metal compound is Ti (IV) halogenide, V (III) halogenide, V (IV) halogenide or V (V) oxyhalogenide.

8. A method for preparing a catalyst according to Claim 7 **characterized in that** compound (b) is titanium halogenide.

9. A method for preparing a catalyst according to Claim 8 **characterized in that** the titanium halogenide is TiCl₄.

10. A process for the production of polyethylene wherein a catalyst is prepared according to any one of the Claims 1-9 and wherein the polymerisation takes place in the presence of said catalyst.

11. A process for the production of polyethylene according to Claim 10 wherein the polymerisation takes place in the presence of a cocatalyst wherein the cocatalyst is an organo aluminium compound having the formula AlR₃ in which R is a hydrocarbon radical containing 1 -10 carbon atoms.

12. A process according to any one of Claims 10-1 **characterized in that** the polyethylene has the following characteristics:
• an average molecular weight higher than 10,000 g/mol and tower than 10,000,000 g/mol
• an average particle size between 50 and 400 µm and
• a bulk density between 200 and 500 kg/m³

13. A process according to any one of Claims 10-12 **characterized in that** the polyethylene is bimodal polyethylene.

## Patentansprüche

1. Verfahren zur Herstellung eines Katalysators zur Herstellung von Polyethylen, der ein festes Reaktionsprodukt umfasst, durch Reaktion:
(a) einer Kohlenwasserstofflösung, umfassend
(1) eine organische Sauerstoff enthaltende Magnesiumverbindung und
(2) eine organische Sauerstoff enthaltende Titanverbindung, und
(b) einer Verbindung, die ein Übergangsmetall aus der Gruppe IV oder V des Periodensystems der chemischen Elemente nach Mendelejew umfasst und mindestens 2 Halogenatome enthält,
wobei bei der Reaktion der Kohlenwasserstofflösung (a) mit der Übergangsmetallverbindung (b) ein Feststoff ausfällt und wobei man die erhaltene Mischung nach der Ausfällungsreaktion zur Beendigung der Reaktion erhitzt und refluxiert.

2. Verfahren zur Herstellung eines Katalysators nach Anspruch 1, **dadurch gekennzeichnet, dass** man das feste Reaktionsprodukt mit einer Aluminiumverbindung der Formel AlRₙX₃₋ₙ, worin X für ein Halogenid steht und R für einen Kohlenwasserstoffrest mit 1-10 Kohlenstoffatomen steht und 0 < n ≤ 3 ist, behandelt.

3. Verfahren zur Herstellung eines Katalysators nach einem der Ansprüche 1-2, **dadurch gekennzeichnet, dass** es sich bei der organischen Sauerstoff enthaltenden Magnesiumverbindung um ein Magnesiumalkoxid handelt.

4. Verfahren zur Herstellung eines Katalysators nach Anspruch 3, **dadurch gekennzeichnet, dass** es sich bei dem Magnesiumalkoxid um Magnesiumethoxid handelt.

5. Verfahren zur Herstellung eines Katalysators nach einem der Ansprüche 1-4, **dadurch gekennzeichnet, dass** es sich bei der organischen Sauerstoff enthaltenden Titanverbindung um ein Titanalkoxid handelt.

6. Verfahren zur Herstellung eines Katalysators nach Anspruch 5, **dadurch gekennzeichnet, dass** es sich bei dem Titanalkoxid um Ti(OC₄H₉)₄ handelt.

7. Verfahren zur Herstellung eines Katalysators nach einem der Ansprüche 1-6, **dadurch gekennzeichnet, dass** es sich bei Verbindung (b), die eine Übergangsmetallverbindung umfasst, um Ti(IV)-Halogenid, V(III)-Halogenid, V(IV)-Halogenid oder V(V)-Oxyhalogenid handelt.

8. Verfahren zur Herstellung eines Katalysators nach Anspruch 7, **dadurch gekennzeichnet, dass** es sich bei Verbindung (b) um Titanhalogenid handelt.

9. Verfahren zur Herstellung eines Katalysators nach Anspruch 8, **dadurch gekennzeichnet, dass** es sich bei dem Titanhalogenid um TiCl₄ handelt.

10. Verfahren zur Herstellung von Polyethylen, bei dem ein Katalysator nach einem der Ansprüche 1-9 hergestellt wird und bei dem die Polymerisation in Gegenwart des Katalysators erfolgt.

11. Verfahren zur Herstellung von Polyethylen nach Anspruch 10, bei dem die Polymerisation in Gegenwart eines Cokatalysators erfolgt, wobei es sich bei dem Cokatalysator um eine Organoaluminiumverbindung der Formel AlR₃, worin R für einen Kohlenwasserstoffrest mit 1-10 Kohlenstoffatomen steht, handelt.

12. Verfahren nach einem der Ansprüche 10-11, **dadurch gekennzeichnet, dass** das Polyethylen die folgenden Eigenschaften aufweist:
• ein mittleres Molekulargewicht von mehr als 10.000 g/mol und weniger als 10.000.000 g/mol
• eine mittlere Teilchengröße zwischen 50 und 400 µm und
• eine Schüttdichte zwischen 200 und 500 kg/m³.

13. Verfahren nach einem der Ansprüche 10-12, **dadurch gekennzeichnet, dass** es sich bei dem Polyethylen um bimodales Polyethylen handelt.

## Revendications

1. Procédé pour la préparation d'un catalyseur pour la production de polyéthylène comprenant un produit réactionnel solide par la réaction de :
(a) une solution dans un hydrocarbure comprenant
(1) un composé organique du magnésium contenant de l'oxygène et
(2) un composé organique du titane contenant de l'oxygène et
(b) un composé comprenant un métal de transition provenant du groupe IV ou V du tableau périodique des éléments chimiques de Mendeleïev et contenant au moins deux atomes d'halogène,
dans lequel pendant la réaction de la solution dans un hydrocarbure (a) avec le composé de métal de transition (b) un solide précipite et dans lequel après ladite réaction de précipitation le mélange résultant est chauffé et porté au reflux pour finir la réaction.

2. Procédé pour la préparation d'un catalyseur selon la revendication 1 **caractérisé en ce que** le produit réactionnel solide est traité avec un composé de l'aluminium répondant à la formule AlRₙX₃₋ₙ dans laquelle X est un halogénure, R est un radical hydrocarboné contenant 1-10 atomes de carbone et 0 < n ≤ 3.

3. Procédé pour la préparation d'un catalyseur selon l'une quelconque des revendications 1-2 **caractérisé en ce que** le composé organique du magnésium et de l'oxygène est un alcoolate de magnésium.

4. Procédé pour la préparation d'un catalyseur selon la revendication 3 **caractérisé en ce que** l'alcoolate de magnésium est l'éthylate de magnésium.

5. Procédé pour la préparation d'un catalyseur selon l'une quelconque des revendications 1-4 **caractérisé en ce que** le composé organique du titane contenant de l'oxygène est un alcoolate de titane.

6. Procédé pour la préparation d'un catalyseur selon la revendication 5 **caractérisé en ce que** l'alcoolate de titane est Ti(OC₄H₉)₄.

7. Procédé pour la préparation d'un catalyseur selon l'une quelconque des revendications 1-6 **caractérisé en ce que** le composé (b) comprenant un composé de métal de transition est un halogénure de Ti(IV), un halogénure de V(III), un halogénure de V(IV) ou un oxyhalogénure de V(V).

8. Procédé pour la préparation d'un catalyseur selon la revendication 7 **caractérisé en ce que** le composé (b) est un halogénure de titane.

9. Procédé pour la préparation d'un catalyseur selon la revendication 8 **caractérisé en ce que** l'halogénure de titane est TiCl₄.

10. Procédé pour la production de polyéthylène dans lequel un catalyseur est préparé selon l'une quelconque des revendications 1-9 et dans lequel la polymérisation a lieu en présence dudit catalyseur.

11. Procédé pour la production de polyéthylène selon la revendication 10 dans lequel la polymérisation a lieu en présence d'un cocatalyseur, le cocatalyseur étant un composé organique de l'aluminium répondant à la formule AlR₃ dans laquelle R est un radical hydrocarboné contenant 1-10 atomes de carbone.

12. Procédé selon l'une quelconque des revendications 10-11 **caractérisé en ce que** le polyéthylène a les caractéristiques suivantes :
- une masse moléculaire moyenne supérieure à 10 000 g/mol et inférieure à 10 000 000 g/mol,
- une taille moyenne des particules comprise entre 50 et 400 µm et
- une masse volumique apparente comprise entre 200 et 500 kg/m³.

13. Procédé selon l'une quelconque des revendications 10-12 **caractérisé en ce que** le polyéthylène est du polyéthylène bimodal.
